# EUROPEAN PATENT APPLICATION

(11) **EP 3 432 038 A1**
(43) Date of publication of application: **23.01.2019**
(21) Application number: 17766542.9
(22) Date of filing: 09.03.2017
(51) Int. Cl.: G01V 3/10, B65B 57/10, G01G 19/387, B65B 5/06, B65B 5/10, B65B 51/14, B65B 9/20, B65B 37/18, B65B 51/30, B65B 57/16, B65B 59/04, B65B 57/00

(54) **INSPECTION UNIT SUPPORT DEVICE AND INSPECTION APPARATUS**

(30) Priority: 16.03.2016 JP 2016052482
(71) Applicant: Ishida Co., Ltd., Kyoto 606-8392 (JP)
(72) Inventor: ICHIKAWA, Makoto, Ritto-shi Shiga 520-3026 (JP); HASHIMOTO, Satoshi, Ritto-shi Shiga 520-3026 (JP); KAGEYAMA, Toshiharu, Ritto-shi Shiga 520-3026 (JP); KISHIKAWA, Mikio, Ritto-shi Shiga 520-3026 (JP)
(74) Representative: Lang, Johannes
(86) International application number: PCT/JP2017/009517
(87) International publication number: WO 2017/159541

(57) **Abstract**

The purpose of the present invention is to provide an inspection unit support apparatus having a mechanism that enables a cylindrical member for guiding an article downward from above to be easily attached to and detached from an inspection unit, and an inspection apparatus provided with the same. An inspection unit support apparatus (80) supports an inspection unit (9). The inspection unit (9) has an inspection chute (91) and a metal detector (92). The inspection chute (91) lets an article to be packaged (C) falling from above pass therethrough and guides the article to be packaged (C) downward. The metal detector (92) conducts inspection on the article to be packaged (C) passing through the inspection chute (91). The inspection unit support apparatus (80) includes a fixing frame (81) and a guide frame (82). The fixing frame (81) is a member to which the inspection unit (9) is affixed. The guide frame (82) is a member supporting the fixing frame (81) such that the fixing frame (81) can move in a horizontal direction.

## Description

### TECHNICAL FIELD

The present invention relates to an inspection unit support apparatus that supports an inspection unit having a cylindrical member that lets an article falling from above pass therethrough and guides the article downward and an inspector for inspecting the article passing through the cylindrical member, and an inspection apparatus provided therewith.

### BACKGROUND ART

There is conventionally used a weighing and packaging system provided with a combination weighing apparatus and a bag manufacturing and packaging apparatus. The combination weighing apparatus divides articles into a plurality of weighing hoppers, selects a combination of weighing hoppers so that the total weight of the divided articles falls within a predetermined range, and discharges the articles downward from those weighing hoppers. The bag manufacturing and packaging apparatus, after horizontally sealing the lower end portion of the packaging material formed into a tube shape, charges the articles discharged from the weighing hopper into the packaging material and transversely seals the upper end portion of the packaging material, thereby manufacturing a bag in which the articles are enclosed.

In a conventional weighing and packaging system, a metal detector is used to prevent metallic foreign matter, which for some reason has come to be mixed in with the articles, from being packaged together with the articles. For example, Patent Document 1 (Japanese Unexamined Patent Application No. S63-148130) and Patent Document 2 (Japanese Translation of PCT International Application Publication No. 2014-511484) disclose weighing and packaging systems in which a combination weighing apparatus is arranged above a bag manufacturing and packaging apparatus, in which a metal detector for detecting metal foreign matter that has become mixed with articles is arranged between the bag manufacturing and packaging apparatus and the combination weighing apparatus.

In such a weighing and packaging system, a chute for guiding articles discharged from the combination weighing apparatus to the charging port of the bag manufacturing and packaging apparatus is disposed between the bag manufacturing and packaging apparatus and the combination weighing apparatus. The chute is a resinous and tubular cylindrical member attached to the metal detector. The chute is removed from the metal detector and cleaned when the production of the article is completed, or when a seasoning used for seasoning the article, which is a food item, is changed.

### SUMMARY OF THE INVENTION

### <Technical Problem>

In the conventional weighing and packaging system, it was necessary to remove the chute from the metal detector when cleaning the chute. However, since the chute is disposed at a high place above the bag manufacturing and packaging apparatus, the operation of attaching/detaching the chute is often a dangerous task involving a stepping stand or the like. Further, in the operation of attaching/detaching the chute, it is necessary to remove the former (the member serving as the article charging inlet) of the bag manufacturing and packaging apparatus disposed below the chute, often entailing cumbersome work. Therefore, there is a demand for a mechanism that enables the chute to be easily attached to and detached from the metal detector.

An object of the present invention is to provide an inspection unit support apparatus and an inspection apparatus provided with the same, the inspection unit support apparatus and an inspection apparatus having a mechanism that enables a cylindrical member for guiding an article downward from above to be easily attached to and detached from an inspection unit.

### <Solution to Problem>

An inspection unit support apparatus according to the present invention supports an inspection unit. The inspection unit has a cylindrical member and an inspector. The cylindrical member lets an article falling from above pass therethrough and guides the article downward. The inspector carries out an inspection on the article passing through the cylindrical member. The inspection unit support apparatus is provided with a first member and a second member. The first member is a member to which the inspection unit is affixed. The second member is a member that supports the first member such that the first member can move in a horizontal direction.

The inspection unit support apparatus is used, for example, in a weighing and packaging system provided with a combination weighing apparatus and a bag manufacturing and packaging apparatus. In this case, the inspection unit supported by the inspection unit support apparatus has a cylindrical member for guiding an article discharged from the combination weighing apparatus to the bag manufacturing and packaging apparatus, and an inspector that inspects the article passing through the cylindrical member. Before removing the cylindrical member from the inspection unit (inspector) to clean the cylindrical member, a worker can slide the inspection unit to pull out the inspection unit in the horizontal direction. The worker, by bringing the inspection unit close to the worker, gains easy access to the inspection unit, and so the cylindrical member can be easily attached to and detached from the inspection unit. Accordingly, this inspection unit support apparatus can improve accessibility to the inspection unit.

It is preferable that the second member be configured such that, after the first member has moved in the horizontal direction, at least a part of the inspection unit can move downward.

In this inspection unit support apparatus, after the worker slides the inspection unit in the horizontal direction, a part of the inspection unit can be lowered so that the inspection unit is brought close to the worker. Accordingly, this inspection unit support apparatus can improve accessibility to and visibility of the inspection unit.

Further, it is preferable that the second member be configured such that, after the first member has moved in the horizontal direction, the inspection unit is tilted.

In this inspection unit support apparatus, after the worker slides the inspection unit in the horizontal direction, the inspection unit can be tilted with respect to the worker. Accordingly, this inspection unit support apparatus can improve accessibility to and visibility of the inspection unit.

It is preferable that the second member support the first member such that, after the first member has moved in the horizontal direction, the first member can move downward while tilting.

In this inspection unit support apparatus, after the worker slides the inspection unit in the horizontal direction, a part of the inspection unit can be lowered so as to bring the inspection unit close to the worker while tilting the inspection unit. Accordingly, this inspection unit support apparatus can improve accessibility to and visibility of the inspection unit.

The second member preferably has a pair of horizontal sections and an inclined section. The pair of horizontal sections support the first member so as to be movable in the horizontal direction. The inclined section is connected to one of the horizontal sections and, by supporting the first member along with the other of the horizontal sections, supports the first member so as to be movable while tilting. The first member affixes the inspection unit between the pair of horizontal sections.

The inspection unit support apparatus is provided with the second member for moving the inspection unit attached to the first member. The second member limits movement of the inspection unit. Accordingly, the inspection unit support apparatus can secure the safety of the worker accompanying movement of the inspection unit.

An inspection apparatus according to the present invention includes the above-described inspection unit support apparatus and an inspection unit supported by the inspection unit support apparatus. The inspection unit includes a cylindrical member and an inspector. The cylindrical member lets an article falling from above pass therethrough and guides the article downward. The inspector inspects the article passing through the cylindrical member. The cylindrical member is detachable from the inspector.

In this inspection apparatus, a worker can easily clean the cylindrical member due to the cylindrical member being detachable from the inspector.

### <Advantageous Effects of Invention>

The inspection unit support apparatus according to the present invention and the inspection apparatus provided with the same each have a mechanism that enables a cylindrical member for guiding an article downward from above to be easily attached to and detached from an inspection unit.

### BRIEF DESCRIPTION OF THE DRAWINGS

FIG. 1 is a perspective view of a weighing and packaging system 100 that is one embodiment of the present invention.
FIG. 2 is a side view of the weighing and packaging system 100.
FIG. 3 is a front view schematically illustrating the constitution of the weighing and packaging system 100.
FIG. 4 is a perspective view schematically illustrating a constitution of a bag manufacturing and packaging unit 3.
FIG. 5 is a perspective view of an inspection unit 9.
FIG. 6 is a perspective view of an inspection unit support apparatus 80 that is in the operating position.
FIG. 7 is a top view of the inspection unit support apparatus 80 illustrated in FIG. 6.
FIG. 8 is a side view of the inspection unit support apparatus 80, viewing from a direction of arrow VIII in FIG. 7.
FIG. 9 is a perspective view of the inspection unit support apparatus 80 in a work position.
FIG. 10 is a top view of the inspection unit support apparatus 80 illustrated in FIG. 9.
FIG. 11 is a side view of the inspection unit support apparatus 80, viewing from a direction of arrow XI in FIG. 10.
FIG. 12 is a drawing illustrating workers performing maintenance work on the weighing and packaging system 100.
FIG. 13 is a drawing that depicts a worker W2 performing the work of removing an inspection chute 91 from the inspection unit 9.
FIG. 14 is a drawing depicting the worker W2 performing the work of removing the inspection chute 91 from the inspection unit 9. FIG. 14 is a drawing viewed from a different angle than FIG. 13.
FIG. 15 is an upper view of the inspection chute 91.
FIG. 16 is a side view of the inspection chute 91, viewing from the direction of arrow XVI in FIG. 15.

### DESCRIPTION OF EMBODIMENTS

An embodiment of the present invention will be described below with reference to the drawings. The embodiment described below is merely a specific example of the present invention, and does not limit the technical scope of the present invention.

### (1) Overall Configuration of Weighing and Packaging System

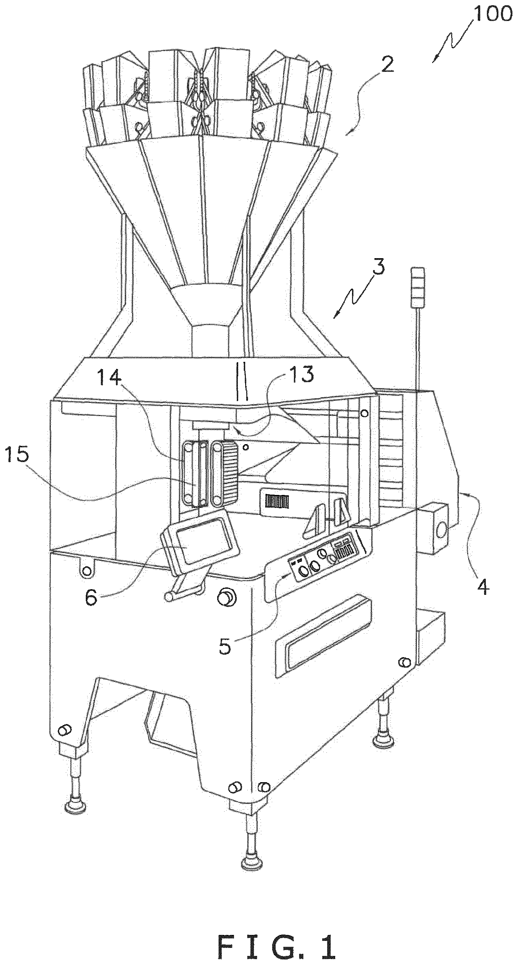

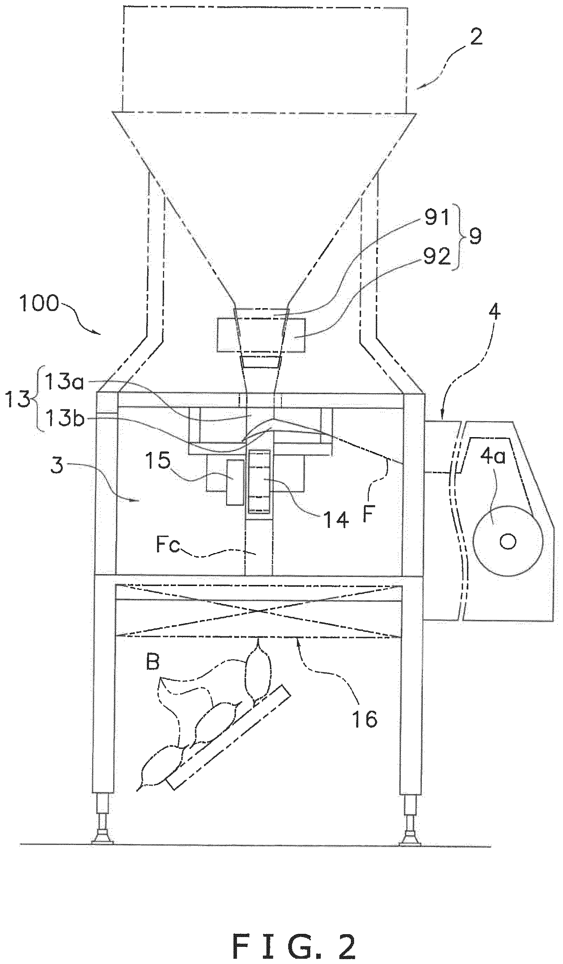

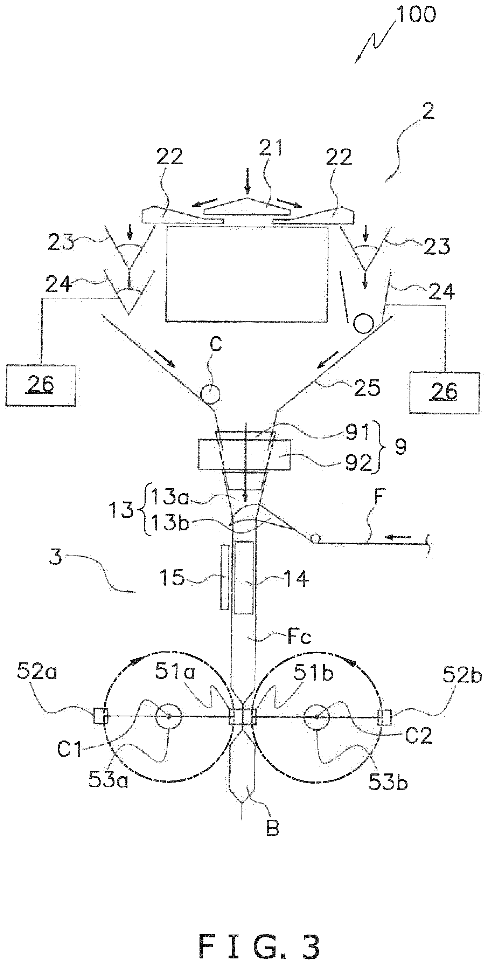

FIG. 1 is a perspective view of a weighing and packaging system 100 that is one embodiment of the present invention. FIG. 2 is a side view of the weighing and packaging system 100. FIG. 3 is a front view schematically showing the constitution of the weighing and packaging system 100. The weighing and packaging system 100 mainly is provided with a combination weighing unit 2, a bag manufacturing and packaging unit 3, an inspection unit 9, a film supply unit 4, an operation switch 5, a liquid-crystal display 6, and a control unit (not illustrated).

The combination weighing unit 2 weighs a predetermined amount of articles to be packaged C by combination weighing. In the present embodiment, the articles to be packaged C are light and brittle food items such as potato chips. The combination weighing unit 2 downwardly ejects the articles to be packaged C that have been weighed to supply the bag manufacturing and packaging unit 3 with the articles. The configuration and operation of the combination weighing unit 2 will be described in detail later.

The bag manufacturing and packaging unit 3 is disposed below the combination weighing unit 2. The bag manufacturing and packaging unit 3 packages the articles to be packaged C that have been supplied with a film F in accordance with the timing at which the articles to be packaged C are supplied from the combination weighing unit 2. The film F is a sheet-shaped, thin packaging material. In the process of sealing the film F, the bag manufacturing and packaging unit 3 manufactures a bag B in which the articles to be packaged C are sealed. The configuration and operation of the bag manufacturing and packaging unit 3 will be described in detail later.

The inspection unit 9 is disposed between the combination weighing unit 2 and the bag manufacturing and packaging unit 3. That is, the inspection unit 9 is located below the combination weighing unit 2 and above the bag manufacturing and packaging unit 3. The inspection unit 9 inspects whether or not foreign matter is mixed in the articles to be packaged C that have been discharged from the combination weighing unit 2. The inspection unit 9 contactlessly inspects the articles to be packaged C that have been discharged and dropped from the combination weighing unit 2. The articles to be packaged C are discharged from the combination weighing unit 2, pass through the inspection unit 9, and are supplied to the bag manufacturing and packaging unit 3. In the present embodiment, the foreign matter is a metallic object that has come to be mixed in the articles to be packaged C for some reason. The configuration and operation of the inspection unit 9 will be described in detail later.

The film supply unit 4 is installed adjacent to the bag manufacturing and packaging unit 3. The film supply unit 4 supplies the film F to the bag manufacturing and packaging unit 3. A film roll 4a around which the film F is wound is loaded in the film supply unit 4. In the film supply unit 4, the film F is fed out from the film roll 4a to be supplied to the bag manufacturing and packaging unit 3.

The operation switch 5 and the liquid-crystal display 6 are attached to the front surface of the main body of the bag manufacturing and packaging unit 3. The liquid-crystal display 6 is a touch panel-type display arranged at a position visible to an operator of the operation switch 5. The operation switch 5 and the liquid-crystal display 6 function as input devices for receiving commands and settings for the combination weighing unit 2, the bag manufacturing and packaging unit 3, the inspection unit 9 and the film supply unit 4. The liquid crystal display 6 functions as an output device for displaying information relating to the combination weighing unit 2, the bag manufacturing and packaging unit 3, the inspection unit 9 and the film supply unit 4.

The control unit is a computer constituted from a CPU, ROM, RAM and the like. The control unit is built in, for example, the bag manufacturing and packaging unit 3. The control unit is connected to the combination weighing unit 2, the bag manufacturing and packaging unit 3, the inspection unit 9, the film supply unit 4, the operation switch 5 and the liquid-crystal display 6. The control unit controls the combination weighing unit 2, the bag manufacturing and packaging unit 3, the inspection unit 9 and the film supply unit 4 on the basis of inputs from the operation switch 5 and the liquid-crystal display 6, and outputs various kinds of information to the liquid crystal display 6.

### (2) Configuration of Combination Weighing Unit

The combination weighing unit 2 is a weighing machine for weighing a predetermined amount of the articles to be packaged C. The articles to be packaged C that have been weighed and ejected by the combination weighing unit 2 pass through the inspection unit 9 and are supplied to the bag manufacturing and packaging unit 3. The combination weighing unit 2 is mainly provided with a dispersion feeder 21, a plurality of troughs 22, a plurality of pool hoppers 23, a plurality of weighing hoppers 24, a collection chute 25, and a plurality of mass sensors 26.

When the articles to be packaged C, which are articles to be weighed, are supplied to the combination weighing unit 2, the articles to be packaged C fall in the vicinity of the center of the dispersion feeder 21. As shown in FIG. 3, the plurality of troughs 22 are provided at the peripheral edge of the dispersion feeder 21. Vibrations from a vibrating device (not shown) are applied to the dispersion feeder 21 and the troughs 22. As a result, as shown by the arrows in FIG. 3, the articles to be packaged C supplied to the dispersion feeder 21 fall through the respective troughs 22 to be stored in pool hoppers 23 corresponding to the respective troughs 22.

Each pool hopper 23 is disposed above a corresponding weighing hopper 24. The pool hopper 23 temporarily stores the articles to be packaged C to be supplied to the corresponding weighing hopper 24. Each weighing hopper 24 has a mass sensor 26. The mass sensor 26 outputs a load signal corresponding to the mass of the articles to be packaged C supplied to the corresponding weighing hopper 24. The mass sensor 26 is, for example, a load cell.

The combination weighing of the articles to be packaged C by the combination weighing unit 2 is carried out according to the following procedure. First, the mass sensor 26 detects the mass of the articles to be packaged C stored in each weighing hopper 24. Next, the combination value closest to a desired value among the sums obtained by combinations of the detected masses is obtained by computation. The desired value is the mass of a predetermined amount of the articles to be packaged C to be supplied to the bag manufacturing and packaging unit 3. Next, from the weighing hopper 24 corresponding to the obtained combination, the articles to be packaged C are discharged to a cylindrical collecting chute 25. The articles to be packaged C discharged to the collecting chute 25 are dropped inside the collecting chute 25 and then pass through the inspection unit 9 to be supplied to the bag manufacturing and packaging unit 3. The weighing hoppers 24 which were emptied by the articles to be packaged C being discharged therefrom are replenished with articles to be packaged C, whereby combination weighing for weighing the predetermined amount of the articles to be packaged C is performed again.

### (3) Configuration of Bag Manufacturing and Packaging Unit

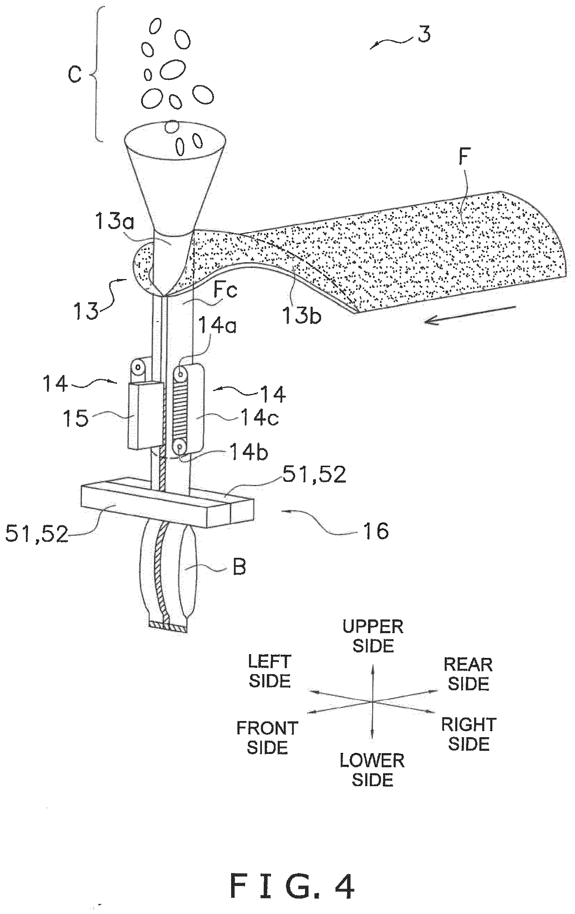

FIG. 4 is a perspective view illustrating a schematic configuration of the bag manufacturing and packaging unit 3. In the description below, six directions of "front side (frontal side)," "rear side (back side)," "upper side," "lower side," "left side," and "right side" are defined as in FIG. 4. FIG. 3 is a drawing that views the bag manufacturing and packaging unit 3 shown in FIG. 4 as viewed along the left-to-right direction.

The bag manufacturing and packaging unit 3 is primarily provided with a forming mechanism 13, a pull-down belt mechanism 14, a longitudinal sealing mechanism 15, and a transverse sealing mechanism 16. The forming mechanism 13 forms a sheet-shaped film F supplied from the film supply unit 4 into a cylindrical shape. The pull-down belt mechanism 14 downwardly conveys the film F formed in a cylindrical shape. The longitudinal sealing mechanism 15 seals an overlap of both ends of the film F formed in a cylindrical shape in a vertical direction parallel to the conveyance direction to form a cylindrical film Fc. The transverse sealing mechanism 16 seals the cylindrical film Fc at two locations in the transverse direction orthogonal to the conveyance direction to form a bag B having transversely sealed upper and lower ends.

### (3-1) Forming Mechanism

The forming mechanism 13 has a tube 13a and a former 13b. The tube 13a is a tubular member having openings in the upper and lower ends thereof. The articles to be packaged C, which are supplied from the combination weighing unit 2, are charged into the opening in the upper end of the tube 13a. The former 13b is arranged so as to surround the tube 13a. The film F fed out from the film roll of the film supply unit 4 is wrapped around the tube 13a and is formed into a cylindrical shape when passing the clearance between the tube 13a and the former 13b. The tube 13a and the former 13b can be replaced in accordance with the size of the bag B to be manufactured.

### (3-2) Pull-down Belt Mechanism

The pull-down belt mechanism 14 sucks the film F wrapped around the tube 13a while conveying the film F downward. The pull-down belt mechanism 14 primarily has drive rollers 14a, driven rollers 14b and a pair of belts 14c. As illustrated in FIG. 4, the pair of belts 14c are arranged on the left and right sides of the tube 13a so as to sandwich the tube 13a, and have a mechanism that sucks the film F formed in a cylindrical shape. The pair of belts 14c are rotatably driven by the drive rollers 14a and the driven rollers 14b, and thereby the pull-down belt mechanism 14 downwardly conveys the film F formed in a cylindrical shape.

### (3-3) Longitudinal Sealing Mechanism

The longitudinal sealing mechanism 15 seals the film F formed in a cylindrical shape in the longitudinal direction (in the up-down direction in FIG. 4). The longitudinal sealing mechanism 15 is arranged on the frontal side of the tube 13a. The longitudinal sealing mechanism 15 moves in the front-rear direction by a drive mechanism (not illustrated) so as to move toward or move away from the tube 13a.

The longitudinal sealing mechanism 15 is driven by the drive mechanism so as to move toward the tube 13a, and thereby the overlap of the film F wound around the tube 13a in the longitudinal direction is sandwiched between the longitudinal sealing mechanism 15 and the tube 13a. The longitudinal sealing mechanism 15, by heating the overlap of the film F while pressing the overlap of the film F against the tube 13a by a given pressure by the drive mechanism, seals the overlap of the film F in the longitudinal direction, and forms a cylindrical film Fc. The longitudinal sealing mechanism 15 has a heater for heating the overlap of the film F, a heater belt that contacts the overlap of the film F, and the like.

### (3-4) Transverse Sealing Mechanism

The transverse sealing mechanism 16 is a mechanism for transversely sealing, which sandwiches portions to be sealed of the cylindrical film Fc conveyed downward by a pair of sealing jaws 51 (sealing jaw 51a and sealing jaw 51b) or a pair of sealing jaws 52 (sealing jaw 52a and sealing jaw 52b) along a direction orthogonal to the conveyance direction of the cylindrical film Fc (left-right direction in FIG. 4).

Next, the transverse sealing operation on the cylindrical film Fc by the pair of sealing jaws 51a, 51b will be described. The sealing jaw 51a, when viewed along the left-right direction, rotates about the rotation center C1, with a first rotating shaft 53a serving as the axis (refer to FIG. 3). The sealing jaw 51b, when viewed along the left-right direction, rotates about the rotation center C2, with a second rotating shaft 53b serving as the axis (refer to FIG. 3).

The sealing jaw 51a and the sealing jaw 51b each have a sealing surface that comes into contact with the cylindrical film Fc when sandwiching the cylindrical film Fc. The cylindrical film Fc that is conveyed downward is sandwiched between the sealing surface of the sealing jaw 51a and the sealing surface of the sealing jaw 51b and is pressed. The sealing jaw 51a and the sealing jaw 51b have heaters inside. The sealing surfaces of the sealing jaws 51a, 51b are heated by these heaters. When the sealing surfaces are heated in a state where the cylindrical film Fc is sandwiched by the pair of sealing jaws 51a, 51b, the sealed portion of the cylindrical film Fc is heat-sealed. The downwardly conveyed cylindrical film Fc is heat-sealed in order from the downstream side (the front side in the conveying direction) to the upstream side (the rear side in the conveying direction), whereby bags B are continuously formed.

A cutter (not illustrated) for cutting the bag B away from the cylindrical film Fc is attached to the sealing jaw 51b, near the middle of the sealing surface in the short-side direction (the up-down direction in FIG. 4). This cutter is attached so that the blade tip protrudes toward the sealing jaw 51a side during the transverse sealing action by the pair of sealing jaws 51a, 51b. A groove (not illustrated), with which the cutter protruding from the sealing jaw 51b meshes, is formed in the sealing jaw 51a near the middle of the sealing surface in the short-side direction (the up-down direction in FIG. 4). The cutter cuts the heat-sealed portion of the cylindrical film Fc from one end side toward the other-end side in the transverse sealing direction (left-right direction). As a result, the bag B is cut away from the cylindrical film Fc.

It should be noted that, since the transverse sealing operation of the cylindrical film Fc by the pair of sealing jaws 52a, 52b and the operation of cutting the bag B away from the cylindrical film Fc by the pair of sealing jaws 52a, 52b are similar to those using the pair of sealing jaws 51a, 51b, descriptions thereof will be omitted.

### (4) Configuration of Inspection Unit

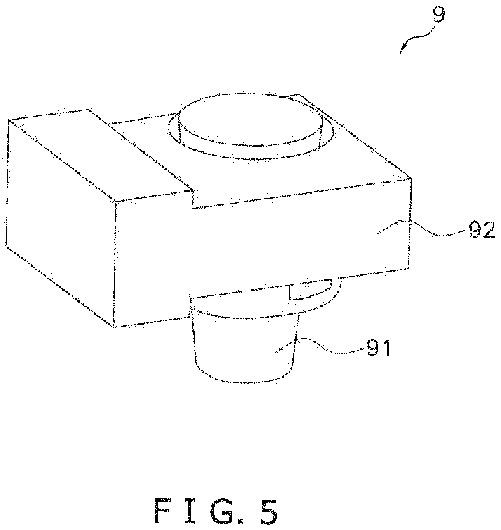

FIG. 5 is a perspective view of the inspection unit 9. The inspection unit 9 is mainly provided with an inspection chute 91 and a metal detector 92. The inspection unit 9 is supported by the inspection unit support apparatus 80.

The inspection chute 91 is a cylindrical member made of resin. The inspection chute 91 has a tapered shape whose diameter gradually decreases from the top to the bottom. As shown in FIG. 3, the articles to be packaged C discharged from the collection chute 25 of the combination weighing unit 2 pass through the inside of the inspection chute 91 while falling, and are then charged into the tube 13a of the bag manufacturing and packaging unit 3.

The metal detector 92 is a device that detects metallic foreign matter mixed in the articles to be packaged C passing through the inspection chute 91. As shown in FIG 5, the metal detector 92 has a hole through which the inspection chute 91 penetrates.

The inspection chute 91 is attachable to and detachable from the inspection unit 9 (metal detector 92). That is, a worker in charge of maintenance of the weighing and packaging system 100 can remove the inspection chute 91 from the metal detector 92, and can attach the inspection chute 91 to the metal detector 92.

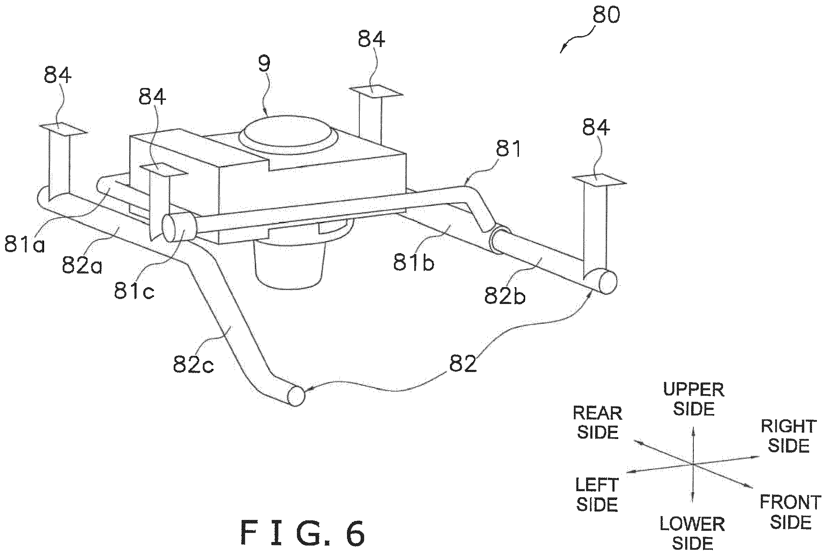

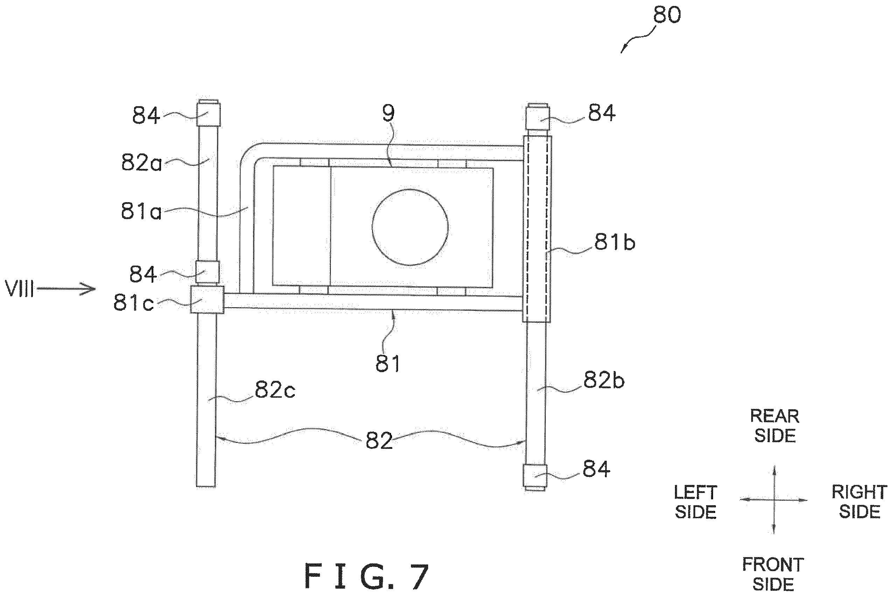

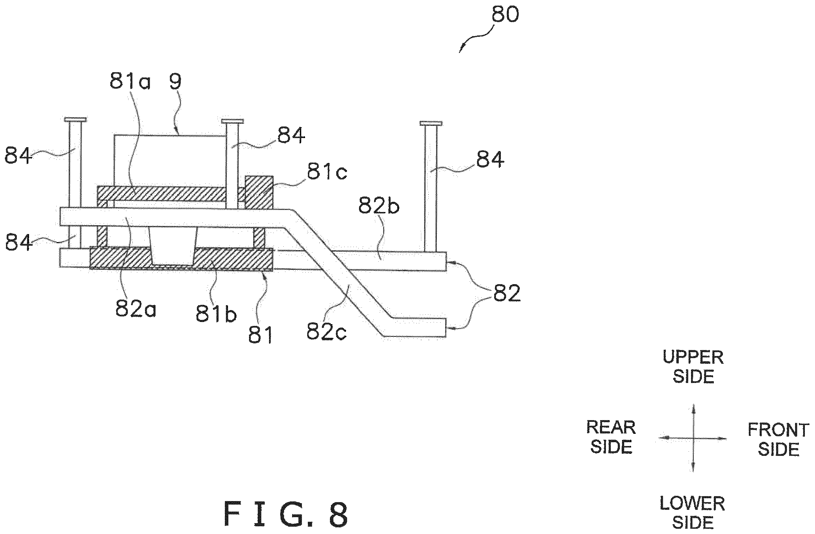

FIG. 6 is a perspective view of the inspection unit support apparatus 80. FIG. 7 is a top view of the inspection unit support apparatus 80 illustrated in FIG. 6. FIG. 8 is a side view of the inspection unit support apparatus 80 as seen from the direction of arrow VIII in FIG. 7. The position of the inspection unit 9 shown in FIGS. 6 to 8 is the position during operation of the weighing and packaging system 100 (hereinafter referred to as "operating position").

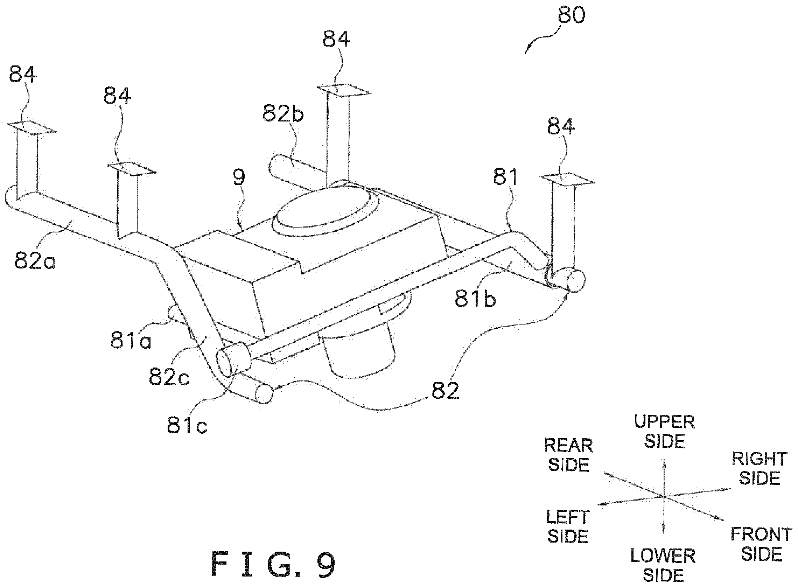

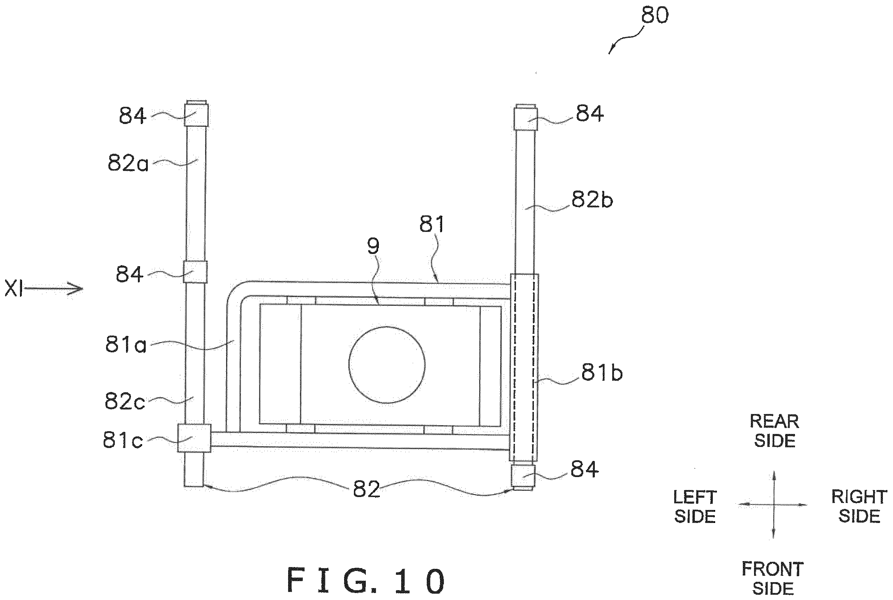

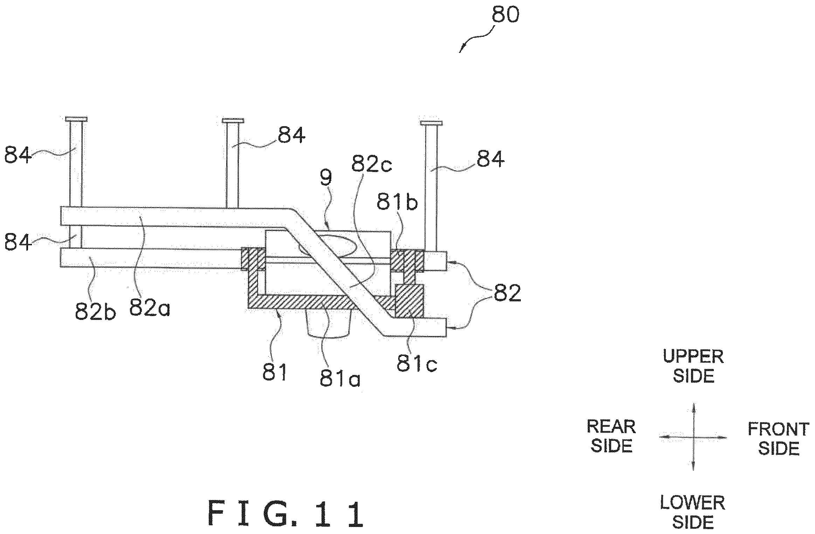

FIG. 9 is a perspective view of the inspection unit support apparatus 80. FIG. 10 is a top view of the inspection unit support apparatus 80 illustrated in FIG. 9. FIG. 11 is a side view of the inspection unit support apparatus 80 as seen in the direction of arrow XI in FIG. 10. The position of the inspection unit 9 in FIGS. 9 to 11 is the position when maintenance work on the weighing and packaging system 100 is being performed (hereinafter referred to as the "work position"). Maintenance work on the weighing and packaging system 100 includes, for example, cleaning of the inspection chute 91 and replacement of the inspection chute 91.

The inspection unit support apparatus 80 is mainly constituted by a fixing frame 81 and a guide frame 82. In FIGS. 8 and 11, the fixing frame 81 is shown as a hatched area for the sake of clarity.

The fixing frame 81 is a member to which the inspection unit 9 is affixed. Normally, the inspection unit 9 is not detached from the fixing frame 81. While the weighing and packaging system 100 is in operation, the inspection unit 9 is in the operating position and the position of the fixing frame 81 is not changed. On the other hand, when performing maintenance work on the weighing and packaging system 100, since it is necessary to move the inspection unit 9 from the operating position to the work position, the position of the fixing frame 81 is changed. For this reason, the fixing frame 81 can move in a predetermined direction. However, as will be described later, the movement of the fixing frame 81 is restricted by the guide frame 82.

The guide frame 82 is a member that supports the fixing frame 81. The guide frame 82 is affixed to the main body of the bag manufacturing and packaging unit 3. The guide frame 82 supports the fixing frame 81 such that the fixing frame 81 can move in a horizontal direction. Further, the guide frame 82 supports the fixing frame 81 such that after the fixing frame 81 has moved in the horizontal direction, the inspection unit 9 that is affixed to the fixing frame 81 is tilted whereby at least a portion of the inspection unit 9 can move downward.

The guide frame 82 is mainly constituted from a pair of horizontal rails 82a, 82b and an inclined rail 82c. The pair of horizontal rails 82a, 82b and the inclined rail 82c extend in the front-rear direction. The pair of horizontal rails 82a, 82b are constituted from a first horizontal rail 82a located on the left side and a second horizontal rail 82b located on the right side. The pair of horizontal rails 82a, 82b are arranged in the horizontal direction and in parallel to each other. The inclined rail 82c is connected to the front end of the first horizontal rail 82a. The inclined rail 82c has a portion that is inclined so as to descend from the rear side toward the front side. The front end of the inclined rail 82c extends in the horizontal direction. As shown in FIGS. 7 and 10, when viewing the guide frame 82 along the up-down direction, the inclined rail 82c is parallel to the pair of horizontal rails 82a and 82b.

The pair of horizontal rails 82a, 82b support the fixing frame 81 so as to be movable in the front-rear direction. The inclined rail 82c supports the fixing frame 81 together with the second horizontal rail 82b. The inclined rail 82c supports the fixing frame 81 so as to be movable in the front-rear direction while tilting the fixing frame 81. A connecting unit 84 is connected to the vicinity of each end of the first horizontal rail 82a and the second horizontal rail 82b. The connecting units 84 are members that extend upward. The upper end of each connecting unit 84 is affixed to the main body of the bag manufacturing and packaging unit 3.

The fixing frame 81 is mainly constituted from a fixing unit 81a, a sliding unit 81b, and a handle unit 81c. The fixing unit 81a is a member for fixing the inspection unit 9 between the pair of horizontal rails 82a, 82b. The sliding unit 81b is a tubular member connected to the right side of the fixing unit 81a. The second horizontal rail 82b passes through the inside of the sliding unit 81b. The sliding unit 81b is slidable with respect to the second horizontal rail 82b. The handle unit 81c is a member connected to the left side of the fixing unit 81a. The handle unit 81c is supported by the first horizontal rail 82a or the inclined rail 82c. The handle unit 81c is positioned more to the front side than the connecting units 84 connected to the first horizontal rail 82a.

The sliding unit 81b is positioned between the pair of connecting units 84 of the second horizontal rail 82b. Therefore, normally, the sliding unit 81b cannot be detached from the second horizontal rail 82b. That is, the fixing frame 81 normally cannot be detached from the guide frame 82.

Since the sliding unit 81b is slidable in the front-rear direction relative to the second horizontal rail 82b, the inspection unit 9 having the fixing frame 81 can move in the front-rear direction. The movable range of the sliding unit 81b is limited by the pair of connecting units 84 of the second horizontal rail 82b. Therefore, the movement range of the inspection unit 9 is likewise limited.

When the weighing and packaging system 100 is not in operation, a worker can pull out the inspection unit 9 from the operating position to the front as shown in FIGS. 9 to 11. Specifically, by holding the handle unit 81c of the fixing frame 81, to which is affixed the inspection unit 9 in the operating position, and pulling the handle unit 81 toward the front, the worker can move the inspection unit 9 to the work position. Conversely, by holding the handle unit 81c of the fixing frame 81, to which is affixed the inspection unit 9 in the work position, and pushing the handle unit 81c toward the rear, the worker can move the inspection unit 9 to the operating position. When the inspection unit 9 is in the work position, as shown in FIG. 9, the inspection unit 9 is in a state of being tilted so as to descend from the right side to the left side.

In the course of moving the inspection unit 9 from the operating position to the work position, the fixing frame 81 is first moved in the horizontal direction (front-rear direction) while being supported by the pair of horizontal rails 82a, 82b. Next, the fixing frame 81 moves in the horizontal direction (front-rear direction) while being supported by the inclined rail 82c and the second horizontal rail 82b. At this time, since the handle unit 81c of the fixing frame 81 moves along the inclined rail 82c, the fixing unit 81a of the fixing frame 81 is tilted. Therefore, the inspection unit 9 affixed to the fixing unit 81a also tilts in the same manner. Accordingly, in the course of moving the inspection unit 9 from the operating position to the work position, the inspection unit 9 moves downward while tilting. As the inspection unit 9 moves downward, the tilt angle of the inspection unit 9 gradually increases. Conversely, as the inspection unit 9 moves from the work position to the operating position, the tilted inspection unit 9 gradually assumes a horizontal state.

### (5) Operation of Control Unit

The control unit is connected to each component of the combination weighing unit 2 and, as a control section of the combination weighing unit 2, constitutes a part of the combination weighing unit 2. Further, the control unit is connected to each component (mainly the pull-down belt mechanism 14, the vertical seal mechanism 15 and the transverse sealing mechanism 16) of the bag manufacturing and packaging unit 3. Therefore, the control unit, as a control section of the bag manufacturing and packaging unit 3, constitutes a part of the bag manufacturing and packaging unit 3. The control unit controls the combination weighing unit 2 and the bag manufacturing and packaging unit 3 by executing a stored program. The control unit controls the combination weighing unit 2 and the bag manufacturing and packaging unit 3, for example, so that the combination weighing unit 2 and the bag manufacturing and packaging unit 3 perform the following operations.

In the combination weighing unit 2, masses of the articles to be packaged C are weighed by the plurality of weighing hoppers 24, and the measured values are combined so as to become a predetermined total mass, with the articles to be packaged C of the predetermined total mass resulting from the combination being discharged downward. The control unit controls the combination weighing unit 2 so that these series of operations are performed. The articles to be packaged C discharged from the combination weighing unit 2 are charged to the upper open end of the tube 13a of the bag manufacturing and packaging unit 3.

As a control section for controlling the bag manufacturing and packaging unit 3, the control unit controls the film supply unit 4 so that the film F is supplied to the forming mechanism 13. As a control section for controlling the bag manufacturing and packaging unit 3, the control unit controls the pull-down belt mechanism 14 such that the film F (cylindrical film Fc) formed into a cylindrical shape by the forming mechanism 13 is conveyed downward. Further, as a control section for controlling the bag manufacturing and packaging unit 3, the control unit controls the longitudinal sealing mechanism 15 so that the overlapping portion of both ends of the cylindrical film Fc to be conveyed downward is sealed in the longitudinal direction. As a control section for controlling the bag manufacturing and packaging unit 3, the control unit controls the transverse sealing mechanism 16 so that, in synchronization with the discharge from the lower end opening of the tube 13a of the articles to be packaged C discharged from the combination weighing unit 2, the cylindrical film Fc conveyed downward is sealed in the transverse direction, and the sealed bag B is cut away from the cylindrical film Fc on the upstream side.

### (6) Features

The weighing and packaging system 100 is provided with the inspection unit 9 supported by the inspection unit support apparatus 80. The inspection unit 9 has an inspection chute 91 and a metal detector 92. The inspection chute 91 is a resinous cylindrical member that guides the articles to be packaged C discharged from the combination weighing unit 2 to the bag manufacturing and packaging unit 3. The metal detector 92 is a device that detects metallic foreign matter mixed in the articles to be packaged C passing through the inspection chute 91. The inspection chute 91 is attached to the metal detector 92. The inspection chute 91 is detached from the metal detector 92 and cleaned when production of the articles to be packaged C is completed or when a seasoning used for seasoning the articles to be packaged C, which are food, is changed.

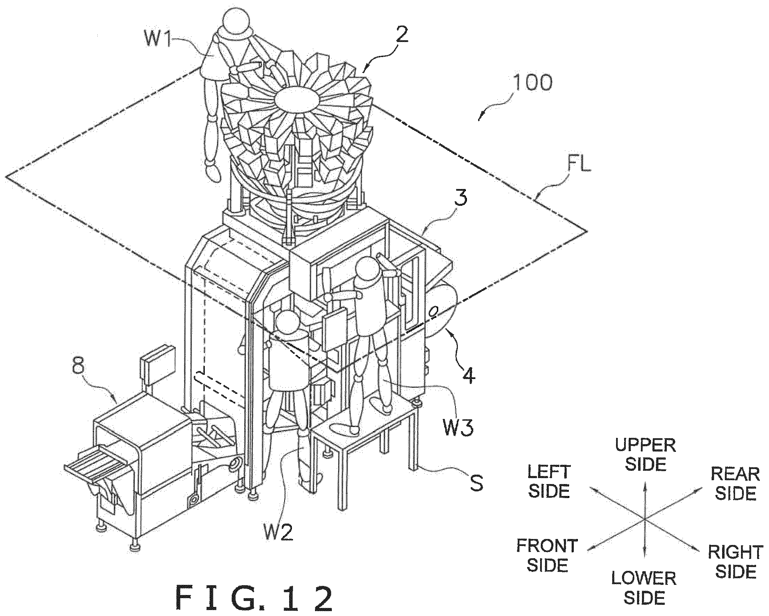

FIG. 12 is a drawing illustrating workers performing maintenance work on the weighing and packaging system 100. FIG. 12 shows the combination weighing unit 2, the bag manufacturing and packaging unit 3, the film supply unit 4, and the bag conveying unit 8. The bag conveying unit 8 is an apparatus independent from the weighing and packaging system 100. The bag conveying unit 8 is provided with a conveyor belt for conveying the bags B produced by the weighing and packaging system 100 to a predetermined location. FIG. 12 shows workers W1, W2, and W3. The worker W1 performs maintenance work on the combination weighing unit 2 located on work floor FL. The worker W2 performs maintenance work on the inspection unit 9 inside the main body of the bag manufacturing and packaging unit 3. The worker W2, standing on the right side of the inspection unit 9, performs maintenance work on the inspection unit 9. The worker W3, who is on a stepping stand S, operates an operation panel of the weighing and packaging system 100.

The inspection unit 9 is located between the combination weighing unit 2 and the bag manufacturing and packaging unit 3, and is normally disposed at a position higher than the worker W2. Before the worker W2 cleans the inspection chute 91, it is necessary to remove the inspection chute 91 from the inspection unit 9 (metal detector 92). Conventionally, a worker was required to remove the inspection chute from the metal detector by using a stepping stand or the like in order to access the metal detector located higher than the worker. Therefore, the work of removing the inspection chute from the metal detector was unstable and dangerous work at height. Further, as shown in FIG. 12, since the bag conveying unit 8 is installed on the front side of the bag manufacturing and packaging unit 3, it is difficult to install a stepping stand or the like in the vicinity of the inspection unit 9.

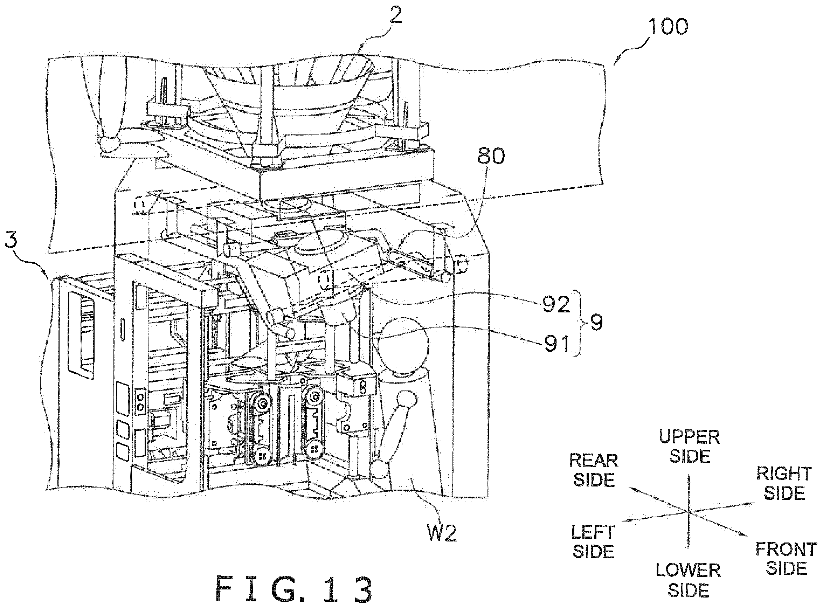

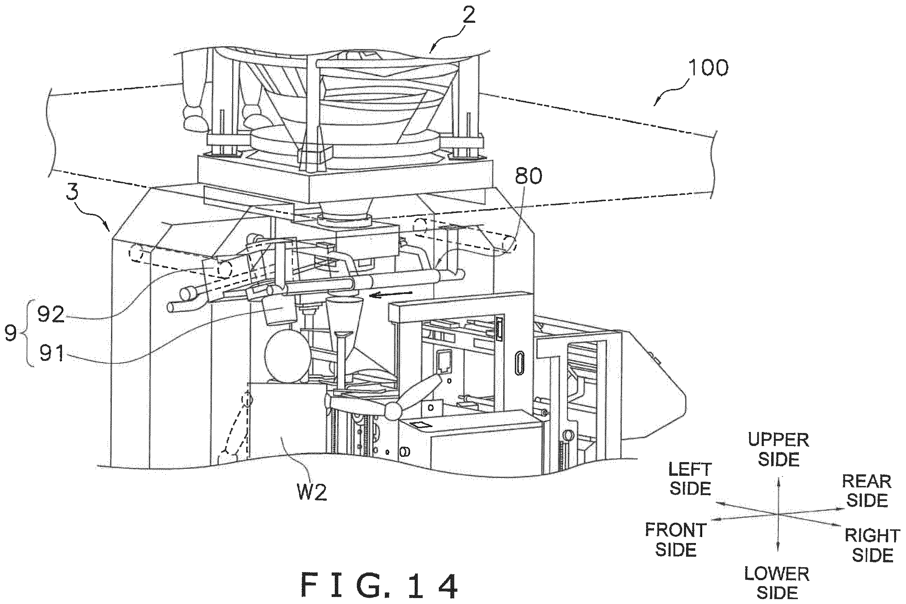

On the other hand, before removing the inspection chute 91 from the metal detector 92 in order to clean the inspection chute 91, the worker W2 in charge of maintenance of the weighing and packaging system 100 of the present embodiment can pull out the fixing frame 81 to which the inspection unit 9 is affixed by sliding the fixing frame 81 in the horizontal direction. FIG. 13 is a drawing showing the worker W2 performing the work of removing the inspection chute 91 from the inspection unit 9. FIG. 14 is a drawing viewed from a different angle than FIG. 13. In FIGS. 13 and 14 individually, the direction of movement of the inspection unit 9 when the worker W2 pulls out the inspection unit 9 from the operating position to the work position is indicated by an arrow.

The inspection unit support apparatus 80 is provided the fixing frame 81, to which the inspection unit 9 is affixed, and the guide frame 82, which guides the fixing frame 81. During maintenance work on the weighing and packaging system 100, the worker W2 grabs the handle unit 81c of the fixing frame 81 and pulls the handle unit 81c out to the front, whereby the inspection unit 9 can be brought close to the worker W2. As shown in FIGS. 9 to 11, in the process of pulling out the fixing frame 81, the left side of the inspection unit 9 moves downward, whereby the inspection unit 9 assumes a tilted state. As shown in FIGS. 13 and 14, since the worker W2 is working on the right side of the inspection unit 9, which is tilted such that the left side is lower than the right side, the inspection unit 9 is easily accessed and viewed from the lower side. Therefore, the worker W2 can easily remove the inspection chute 91 from the metal detector 92 of the inspection unit 9 without using a stepping stand or the like, and can easily attach the inspection chute 91 to the metal detector 92. Accordingly, the inspection unit support apparatus 80 can improve accessibility to and visibility of the inspection unit 9 during maintenance work.

The movement of the fixing frame 81 in the front-rear direction is limited by the guide frame 82. Therefore, when the worker W2 pulls out the inspection unit 9, the fixing frame 81 is prevented from being detached from the guide frame 82. That is, even if the worker W2 forcefully pulls out the fixing frame 81 to the front, the inspection unit 9 does not detach from the inspection unit support apparatus 80 and fall. Accordingly, the inspection unit support apparatus 80 can secure the safety of the worker W2 accompanying movement of the inspection unit 9.

### (7) Modifications

The embodiment of the present invention is described above, but the present invention is not limited to the above embodiment, and various changes may be made without departing from the spirit and scope of the invention.

### (7-1) Modification A

In the embodiment, the worker W2 in charge of maintenance of the weighing and packaging system 100 removes the inspection chute 91 from the inspection unit 9 (metal detector 92) in order to clean the inspection chute 91. Therefore, as will be described below, it is preferable that the inspection unit 9 have a structure that allows the inspection chute 91 to be easily attached to and detached from the metal detector 92.

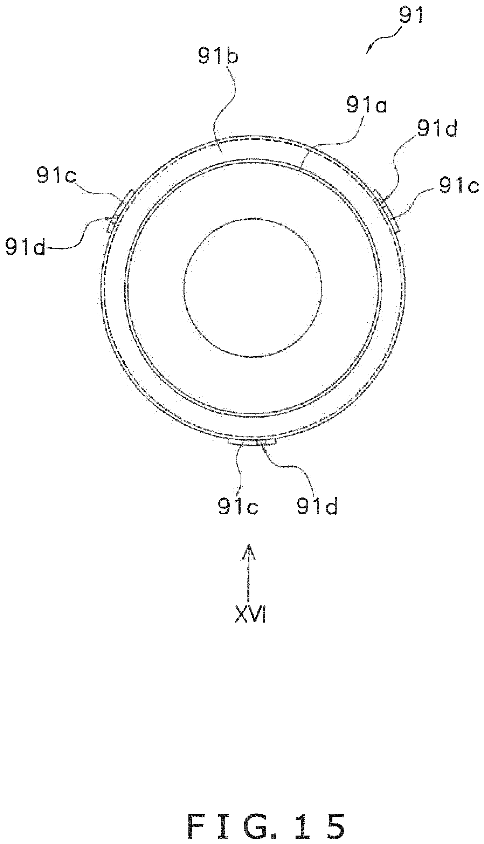

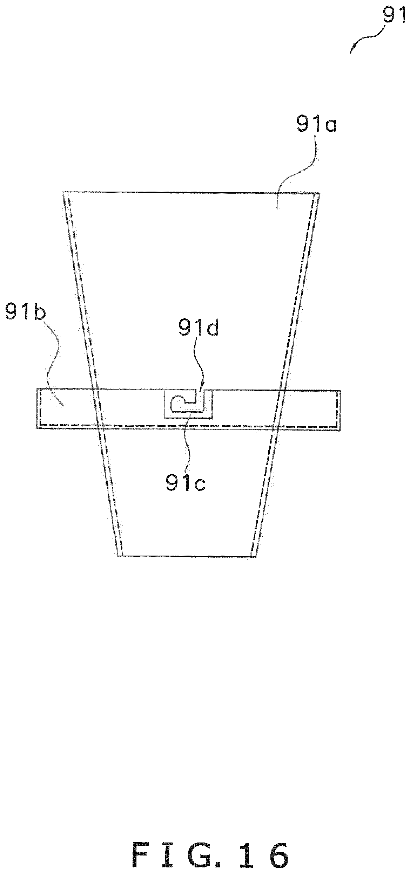

FIG. 15 is a top view of the inspection chute 91. FIG. 16 is a side view of the inspection chute 91 viewed from the arrow XVI in FIG. 15. The inspection chute 91 is mainly constituted from a cylindrical unit 91a and a mounting unit 91b. The cylindrical unit 91a is a member through which the articles to be packaged C discharged from the combination weighing unit 2 pass. The cylindrical unit 91a has a tapered shape in which the diameter gradually decreases from the upper side to the lower side. The mounting unit 91b is attached to the outer peripheral surface of the cylindrical unit 91a at the intermediate portion in the vertical direction of the cylindrical unit 91a. The mounting unit 91b is shaped like a circular tray. A plurality of hook units 91c are attached to the outer peripheral surface of the mounting unit 91b. The plurality of hook units 91c are attached at equal intervals along the circumferential direction of the mounting unit 91b. In FIG. 15, the mounting unit 91b has three hook units 91c. Each hook unit 91c further protrudes radially outward from the outer peripheral surface of the mounting unit 91b. As shown in FIG. 16, the hook units 91c each have a hook-shaped trapping groove 91d.

The mounting unit 91b is a member for trapping and attaching the inspection chute 91 to the metal detector 92. On the inner circumferential surface of the hole through which the inspection chute 91 passes, the metal detector 92 has protrusions to be caught in the trapping grooves 91d. By slightly moving the inspection chute 91 circumferentially in the up-down direction, the worker can easily attach the inspection chute 91 to the metal detector 92, and easily remove the inspection chute 91 from the metal detector 92.

### (7-2) Modification B

In the embodiment, the inspection unit support apparatus 80 is attached to the weighing and packaging system 100. However, the inspection unit support apparatus 80 may be used for other purposes. Specifically, the inspection unit support apparatus 80 can be used to support a device that needs to be periodically accessed for maintenance work or the like.

### (7-3) Modification C

In the embodiment, the inspection unit 9 has the inspection chute 91 and the metal detector 92. The metal detector 92 is a device for detecting metallic foreign matter mixed in the articles to be packaged C passing through the inspection chute 91. However, instead of the metal detector 92, the inspection unit 9 may have a device other than the metal detector 92. Alternatively, in addition to the metal detector 92, the inspection unit 9 may further have a device other than the metal detector 92. For example, the inspection unit 9 may further have an X-ray inspector as a device for detecting foreign matter mixed in the articles to be packaged C.

### REFERENCE SIGNS LIST

9 Inspection unit
80 Inspection unit support apparatus
81 Fixing frame (first member)
82 Guide frame (second member)
82a Pair of horizontal rails (pair of horizontal sections)
82b Pair of horizontal rails (pair of horizontal sections)
82c Inclined rail (inclined section)
91 Inspection chute (cylindrical member)
92 Metal detector (inspector)
C Articles to be packaged (article)

### CITATION LIST

### PATENT LITERATURE

[Patent Document 1] Japanese Unexamined Patent Application Publication No. S63-148130
[Patent Document 2] Japanese Translation of PCT International Application Publication No. 2014-511484

## Claims

1. An inspection unit support apparatus that supports an inspection unit including a cylindrical member that lets an article falling from above pass therethrough and guides the article downward, and an inspector that inspects the article passing through the cylindrical member, the inspection unit support apparatus comprising:
a first member to which the inspection unit is affixed; and
a second member that supports the first member such that the first member can move in a horizontal direction.

2. The inspection unit support apparatus according to claim 1, wherein
the second member is configured such that, after the first member has moved in the horizontal direction, at least a part of the inspection unit can move downward.

3. The inspection unit support apparatus according to claim 2, wherein
the second member is configured such that, after the first member has moved in the horizontal direction, the inspection unit is tilted.

4. The inspection unit support apparatus according to any one of claims 1 to 3, wherein
the second member supports the first member such that, after the first member has moved in the horizontal direction, the first member can move downward while tilting.

5. The inspection unit support apparatus according to any one of claims 1 to 4, wherein
the second member includes:
a pair of horizontal sections that support the first member so as to be movable in the horizontal direction; and
an inclined section that is connected to one of the pair of horizontal sections and that, by supporting the first member with the other of the pair of horizontal sections, supports the first member so as to be movable while tilting,
and the first member affixes the inspection unit between the pair of horizontal sections.

6. An inspection apparatus comprising:
the inspection unit support apparatus according to any one of claims 1 to 5; and
an inspection unit that is supported by the inspection unit support apparatus,
the inspection unit including:
a cylindrical member that lets an article falling from above pass therethrough and guides the article downward; and
an inspector that inspects the article passing through the cylindrical member,
the cylindrical member being detachable from the inspector.
